# EUROPÄISCHE PATENTSCHRIFT

(11) **EP 0 979 769 B1**
(45) Veröffentlichungstag und Bekanntmachung des Hinweises auf die Patenterteilung: **18.06.2003**
(21) Anmeldenummer: 99114753.9
(22) Anmeldetag: 28.07.1999
(51) Int. Cl.: B62D 17/00, B62D 6/04, B60G 17/015, B60G 3/26, B60G 7/00

(54) **Radaufhängung für Kraftfahrzeuge, insbesondere unabhängige Radaufhängung für Personenkraftwagen**
Wheel suspension for motor vehicles, particularly independent wheel suspension for passenger motorcars
Suspension de roue pour véhicules automobiles, en particulier suspension de roue indépendante pour voitures automobiles de passagers

(30) Priorität: 12.08.1998 DE 19836440
(43) Veröffentlichungstag der Anmeldung: 16.02.2000
(73) Patentinhaber: DaimlerChrysler AG, 70567 Stuttgart (DE)
(72) Erfinder: Mäckle, Günther, 70619 Stuttgart (DE); Schirle, Thomas, 74613 Öhringen (DE)

(56) Entgegenhaltungen:
- DE-A- 3 139 792
- DE-A- 3 928 135
- FR-A- 2 561 193
- FR-A- 2 608 974
- PATENT ABSTRACTS OF JAPAN vol. 011, no. 347 (M-641), 13. November 1987 (1987-11-13) & JP 62 125907 A (ISUZU MOTORS LTD), 8. Juni 1987 (1987-06-08)

## Beschreibung

Die Erfindung betrifft eine Radaufhängung für Kraftfahrzeuge, insbesondere eine unabhängige Radaufhängung für Personenkraftwagen gemäß dem Oberbegriff des Anspruches 1.

Bei einer aus der IT-Zeitschrift: A.M. 06/94, Seite 129 bekannten Radaufhängung, die als unabhängige Radaufhängung ausgebildet ist und bei der eine aktive Einstellung des Radsturzes vorgesehen ist, erfolgt die Sturzverstellung über ein Stellglied, das auf einen der mit dem Radträger unmittelbar verbundenen Radführungslenker einwirkt, so daß in Verbindung mit der Verstellung des Sturzes, die über die Verstellung dieses Führungslenkers herbeigeführt wird, die durch die Führungslenker bestimmte Radführungsgeometrie insgesamt verändert wird. Eine derartige wechselseitige Beeinflussung ist aber keineswegs erstrebenswert und macht die Verstellung des Sturzes über größere Sturzwinkelbereiche wegen der damit verbundenen Rückwirkung auf die Radwirkung als solche nahezu unmöglich.

Aus der DE 39 28 135 A1 ist eine Radaufhängung gemäß dem Oberbegriff des Anspruches 1 bekannt, bei der der Radträger über ein Kugelgelenk im Zwischenträger gelagert ist, wobei der Mittelpunkt des Kugelgelenkes in der Radachse liegt. Die dadurch gegebene allseitige Verschwenkbarkeit, die über im Übergang zwischen Zwischenträger und Radträger liegende Stellglieder gesteuert ist, dient der Beeinflussung von für das Fahrverhalten des Fahrzeuges wesentlichen Größen wie Radsturz, Spur oder dergleichen in Abhängigkeit von Fahrgeschwindigkeit, Querbeschleunigung, Lenkwinkel, Fahrzeugbeladung und ähnlichem, wobei die Größenordnung der Verstellbarkeiten im Rahmen dessen liegt, was im Hinblick auf fahrverhaltensabhängige Änderungen des Sturzes, der Vor- oder Nachspur oder des Lenkwinkels an Hinterachsen üblich ist, also im Bereich verhältnismäßig kleiner Winkelwerte liegt.

Entsprechendes gilt für Radaufhängungen, wie sie aus der DE 37 44 069 A1 bekannt sind.

Der Erfindung liegt die Aufgabe zugrunde, eine Radaufhängung für Kraftfahrzeuge, insbesondere eine unabhängige Radaufhängung für Personenkraftwagen, der eingangs genannten Art dahingehend auszubilden, daß durch aktive Sturzverstellung eine Nutzung unterschiedlicher Reifeneigenschaften und/oder Reifenlagen zur Fahrbahn in Abhängigkeit von Fahrbahneigenschaften und/oder Fahrzustandsgrößen zur Verbesserung der Beherrschbarkeit des Fahrzeuges ohne Eingriff in die Geometrie der Radführung möglich wird.

Als karosserieseitige Radführung dienen je nach Art der Radaufhängung, die verwendet wird und die in Gestalt einer Starrachse, einer semistarren Achse (z.B. Verbundlenkerachse), einer unabhängigen Radaufhängung oder einer sonstigen Radaufhängung ausgebildet sein kann, die Elemente der Radaufhängung, die die karosserieseitigen Anschlußelemente bilden, also beispielsweise der Achskörper, die Führungsarme der Verbundlenkerachse oder die Radführungslenker - starr oder unstarr, beispielsweise Blattfederarme - einer unabhängigen Radaufhängung.

Eine erfindungsgemäße Konstruktion macht, bezogen auf eine unabhängige Radaufhängung als Beispiel, die Verwendung bzw. den Rückgriff auf unabhängige Radaufhängungen in bekannter Ausgestaltung möglich und gestattet es, ohne Eingriff in die gegebene Radführungsgeometrie den Sturzwinkel des Rades soweit zu verändern, daß sich vielfältige, bislang nicht realisierte Effekte erzielen lassen. Insbesondere gilt dies in Verbindung mit Steuerungs- bzw. Regelstrategien, bei denen die Sturzverstellung in Abhängigkeit von jeweils zu beherrschenden Fahrsituationen, und gegebenenfalls in Anpassung an diese automatisiert vorgenommen wird.

So läßt sich die Sturzverstellung im Hinblick auf die Erhöhung der übertragbaren Seitenkräfte nutzen - hoher negativer Sturz an den kurvenaußenseitigen Rädern -, wobei die entsprechende Sturzverstellung in Abhängigkeit von der Querbeschleunigung gesteuert werden kann, beispielsweise mit ansteigender Querbeschleunigung der Sturzwinkel vergrößert werden kann. Besondere Vorteile bietet dies in Verbindung mit Reifen, die bezogen auf unterschiedliche Sturzwinkel mit unterschiedlichen Laufflächenteilen gegen die Fahrbahn abgestützt sind und bei denen diese Laufflächenteile bezüglich der Materialauswahl und/oder bezüglich des Laufflächenprofiles an die jeweiligen Anforderungen angepaßt sind.

Die Erfindung ermöglicht die Umsetzung von der Verbesserung der Fahrsicherheit dienenden Strategien durch Sturzverstellung beispielsweise dadurch, daß die entsprechenden Einflußgrößen über einen Sturzrechner verarbeitet und als entsprechende Sollsturzwinkel eingesteuert werden, wobei dies bevorzugt an den vier Rädern eines mehrspurigen Fahrzeuges, zumindest aber jeweils an zwei Rädern einer Achse geschieht. Zu berücksichtigende Einflußgrößen sind beispielsweise der Ist-Sturzwinkel, die Fahrgeschwindigkeit, der Lenkradwinkel, die Lenkradwinkelverstellgeschwindigkeit, die Gierrate, der Straßenzustand und die bezogen auf den jeweils einzustellenden Sturzwinkel gegebene Größe der Radaufstandsfläche.

Zumindest ein Teil dieser Zustandsgrößen wird bei Fahrzeugen, die mit einem Lenkungsrechner ausgestattet sind, auch für den Lenkungsrechner erfaßt. Als Einflußgrößen sind hierbei insbesondere zu berücksichtigen die Querbeschleunigung, die Geschwindigkeit, der Lenkradwinkel, die Verstellgeschwindigkeit des Lenkradwinkels, die Gierrate und der gleichen. Auf den jeweiligen Soll-Lenkwinkel haben bei erfindungsgemäß im Sturzwinkel aktiv verstellbaren, unabhängigen Radaufhängungen auch der Ist-Sturzwinkel und der jeweils angestrebte Soll-Sturzwinkel Einfluß. Dementsprechend sind Sturzrechner und Lenkungsrechner miteinander verknüpfbar, und die Erfassung auch weiterer Kenngrößen, insbesondere von Kenngrößen aus dem Bremssystem macht es möglich, die Sturzverstellung auch im Hinblick auf die Verbesserung der Fahrdynamik und der Fahrstabilität des Fahrzeuges zu nutzen.

So ist die Sturzverstellung zur Beherrschung hochdynamischer Ausweichmanöver zu nutzen, einmal über die durch Sturzänderung erreichbare Veränderung der Seitenführung, zum anderen durch mit dem Sturzstellen als solchem verbundene Lenkeffekte. Insbesondere lassen sich derartige Stabilisierungseffekte, bei denen die Veränderung der Sturzstellung im Sinne einer Vierradlenkung genutzt wird, bei hohen Geschwindigkeiten nutzen.

In Verbindung mit Bremsmanövern, insbesondere bei Notbremsungen, wie sie beispielsweise bei Aktivierung des sogenannten "Bremsassistenten" auftreten, beim Ansprechen von Antiblockiersystemen oder dergleichen können Sturzänderungen eingeleitet werden, um die Stabilität zu verbessern, und dies insbesondere in Verbindung mit Reifen, deren Laufflächenbereiche unterschiedliche Haftbeiwerte aufweisen, die in Verbindung mit der Veränderung des Sturzes als Aufstandsbereiche in Einsatz kommen, wobei in Verbindung mit der Änderung des Sturzes auch Effekte der Veränderung der Größe der Reifenaufstandsbereiche zu nutzen sind.

Die Sturzverstellung bietet in Verbindung mit Reifen, bei denen in Abhängigkeit vom jeweils eingestellten Sturz unterschiedlich gestaltete Laufflächenbereiche in Einsatz kommen, auch die Möglichkeit, witterungsbedingte Fahrschwierigkeiten besser zu beherrschen, beispielsweise dadurch, daß durch Sturzverstellung Laufflächenbereiche in Einsatz gebracht werden, die als Stollenreifen ausgebildet sind oder mit Spikes bestückt sind. Ferner kann die Sturzverstellung auch in Verbindung mit Fahrdynamiksystemen eingesteuert werden, und zwar anstatt oder in Verbindung mit den über solche Systeme beim Durchrutschen der Räder angestoßenen Maßnahmen, wie beispielsweise Bremseneingriff oder dergleichen.

Konstruktiv ermöglicht die erfindungsgemäße, zur Radachse höhenversetzte Lage der Schwenkachse des Radträgers beim Sturzstellen große Freiheiten, da sie auch durch voneinander unabhängige Gelenke gebildet sein kann, sowie einen weitgehenden Anordnungsspielraum für das Stellglied, das zwischen Radträger und Zwischenträger wirksam ist. Mit der Anordnung des Stellgliedes zwischen Radträger und Zwischenträger läßt sich desweiteren auch ein Eingriff in Funktion und Ausgestaltung der Radführungslenker vermeiden, wobei als Stellglieder herkömmliche Bauelemente in Form hydraulischer oder elektrischer Aktuatoren, so beispielsweise in Form hydraulischer Stellzylinder oder elektrischer Spindelantriebe Verwendung finden können. Ebenso sind verhältnismäßig viele Möglichkeiten bezüglich der Lage der Schwenkachse im Rahmen der Erfindung gegeben, so daß auch angetriebene Achsen ohne Schwierigkeiten darstellbar sind, zumal der Radträger auch unterschiedlichste Bauformen haben kann, so beispielsweise, in Seitenansicht, sichelförmig ausgestaltet sein kann.

Im Hinblick auf die Realisierung der erfindungsgemäß großen Veränderung des Sturzwinkels bei bezogen auf die Radachse relativ hoch liegender Schwenkachse zur Erzielung entsprechender Spurverbreiterungen, die auch das Lenkverhalten beeinflussen, kann es zweckmäßig sein, die Schwenkachse zur Fahrbahnebene mit einer gewissen Neigung anzuordnen, um unabhängig von der über die karosserieseitige Radführung, insbesondere die Radführungslenker bestimmte Lenkgeometrie und die Lenkung in Verbindung mit der Sturzverstellung zusätzliche Lenkeffekte zu erreichen, die die mit der Sturzverstellung verbundenen Lenkeffekte mehr oder minder kompensieren und ungeachtet der Sturzverstellung das übliche Lenkverhalten mehr oder minder beizubehalten ermöglichen, oder auch umgekehrt, um in Verbindung mit der Sturzverstellung sich einstellende Lenkeffekte, z.B. an nicht gelenkten Achsen, gegebenenfalls zu verstärken.

Wird die erfindungsgemäße Radaufhängung in Verbindung mit gelenkten Rädern eingesetzt, so ist zusätzlich eine aufrechte Lenkachse vorzusehen, wobei diese Lenkachse erfindungsgemäß sowohl zwischen Zwischenträger und Radführung wie auch zwischen Radträger und Zwischenträger vorgesehen sein kann.

Insbesondere erweist es sich auch als zweckmäßig, die Radführung zunächst mit einem Systemträger zu versehen, der seinerseits den Zwischenträger trägt, wobei die Lenkachse zwischen Zwischenträger und Systemträger liegen kann, oder auch der Systemträger als solches seinerseits schwenkbar angeordnet werden kann.

Eine weitere im Rahmen der Erfindung liegende Ausgestaltung besteht darin, sowohl zwischen Zwischenträger und Radführung wie auch zwischen Zwischenträger und Radträger jeweils eine aufrechte Lenkachse vorzusehen, wobei diese Lenkachsen auch gegeneinander geschränkt sein können, und wobei es von Vorteil ist, die Schwenkbarkeit bezüglich einer dieser Lenkachsen, insbesondere der zwischen Zwischenträger und Radführung vorgesehenen Lenkachse in Verbindung mit der Ziellenkung, d.h. der Lenkung durch den Fahrer zu nutzen, während die andere Lenkachse, insbesondere die zwischen Zwischenträger und Radträger vorgesehene Lenkachse genutzt wird, um Lenkkorrekturen vorzunehmen, beispielsweise in Anpassung an durch die Radführung bedingte Lenkbewegungen oder im Hinblick auf unter fahrdynamischen Gesichtspunkten erwünschte Lenkbewegungen der Räder. Entsprechend der Anordnung der Lenkachsen sind entsprechende Stellglieder vorzusehen die zwischen Radträger und Zwischenträger oder zwischen Zwischenträger und Radführung bzw. Systemträger oder zwischen Systemträger und Radführung anzuordnen sind.

Weitere Einzelheiten und Merkmale der Erfindung ergeben sich aus den Ansprüchen. Ferner wird die Erfindung mit weiteren Details nachstehend anhand der Zeichnungsbeschreibung erläutert, wobei die dort dargestellte unabhängige Radaufhängung als Beispiel für sonstige Radaufhängungs- und Radführungssysteme steht. Es zeigen:
- Figur 1: eine Prinzipdarstellung einer unabhängigen Radaufhängung gemäß der Erfindung, bei der zwischen Radträger und Radführungslenkern ein Zwischenträger vorgesehen ist und der Radträger gegenüber dem Zwischenträger um eine in Fahrzeuglängsrichtung verlaufende Achse schwenkbar und über ein dem Zwischenträger zugeordnetes Stellglied in seiner Sturzstellung veränderbar ist,
- Figur 2: ein Ausführungsbeispiel einer unabhängigen Radaufhängung, die dem Prinzip gemäß Figur 1 folgt, in einer teils geschnittenen perspektivischen Rückansicht,
- Figur 3: eine der Figur 2 entsprechende Darstellung bei in eine negative Sturzstellung geschwenktem Rad,
- Figur 4: eine schematische Darstellung der Steuer- bzw. Regeleinheit mit wesentlichen Ein- und Ausgangsgrößen, über die für die aktive Sturzstellung des Rades der jeweilige Radsturz ermittelt und eine entsprechende Ansteuerung des Stellgliedes vorgenommen oder ausgelöst wird,
- Figur 5: eine weitere Prinzipdarstellung einer erfindungsgemäßen Radaufhängung mit zwischen Zwischenträger und Radträger angeordneter Lenkachse, und
- Figur 6: eine schematische Darstellung, in der die Lage der Schwenkachsen und der zugehörigen Stellglieder verdeutlicht ist.

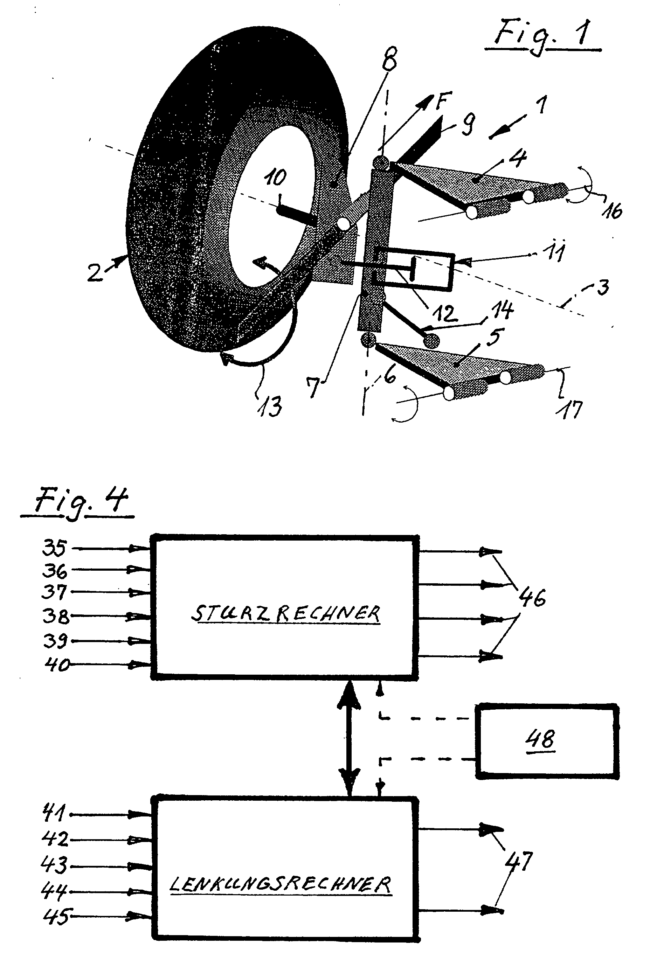

Figur 1 zeigt für ein mehrspuriges Kraftfahrzeug in Form eines Personenkraftwagens, der nicht weiter dargestellt ist und dessen Vorwärtsfahrtrichtung durch den Pfeil F symbolisiert ist, im Schema eine unabhängige Radaufhängung, die insgesamt mit 1 bezeichnet ist und über die ein Rad 2 des Fahrzeuges geführt ist, dessen Radachse mit 3 bezeichnet ist.

Die Aufhängung für das Rad 2 ist veranschaulicht durch je einen oberen Führungslenker 4 und einen unteren Führungslenker 5, wobei die Führungslenker 4 und 5 als Dreieckslenker dargestellt sind, die um in Fahrzeugslängsrichtung verlaufende Schwenkachsen 16 bzw. 17 mit dem nicht dargestellten Aufbau des Fahrzeuges verbunden sind. Die Darstellung der Radaufhängung in Form der vorgeschilderten, klassischen Ausgestaltung mit dreiecksförmigen Querlenkern hat nur Beispielscharakter, und anstelle solcher dreiecksförmiger Querlenker könnten als Radführungslenker auch eine Mehrzahl von Einzellenkern eingesetzt sein.

Die Führungslenker 4 und 5 sind jeweils gelenkig mit einem Zwischenträger 7 verbunden, an dem der eigentliche Radträger 8 über eine in Fahrzeuglängsrichtung verlaufende Schwenkachse 9 quer zur Fahrtrichtung schwenkbar angelenkt ist. Die Schwenkachse kann abweichend vom gezeigten Ausführungsbeispiel auch in aufgelöster Bauweise, so durch mehrere Schwenkzapfen oder durch mehrere Gelenke gebildet bzw. bestimmt sein. Der Radträger 8 trägt den Achszapfen 10, auf dem das Rad 2 gelagert ist. Zum Verschwenken des Radträgers 8 um die Schwenkachse 9 dient das Stellglied 11, das symbolisch als Stellzylinder veranschaulicht ist, der gegenüber dem Zwischenträger 7 fixiert ist und dessen Kolbenstange 12 am Radträger 8 schwenkbar angelenkt ist. Die Verschwenkbarkeit des Radträgers 8 um die in Fahrtrichtung F verlaufende Schwenkachse 9, die hier als körperliche Achse stilisiert massiv dargestellt ist, wird durch den Doppelpfeil 13 symbolisiert, wobei mit dem Ausfahren der Kolbenstange 12 bei entsprechender Druckbeaufschlagung des Stellzylinders 11 eine Verschwenkung des Rades 2 im Sinne einer Verstellung des Radsturzes ins Negative verbunden ist.

Die Prinzipdarstellung gemäß Figur 1 veranschaulicht, daß die Sturzverstellung des Rades 2 durch Verschwenken des Radträgers 8 um die Achse 9 mittels des Stellgliedes 11 die durch die Führungslenker 4 und 5 und den diesen zugeordneten Zwischenträger 7 festgelegte Grundgeometrie der unabhängigen Radaufhängung nicht beeinflußt. Diese bleibt also unabhängig von der jeweiligen, durch Verschwenken des Radträgers 8 eingestellten Sturzlage des Rades 2 erhalten, wobei, wie Figur 1 veranschaulicht, bei Verwendung der Radaufhängung für eine gelenkte Achse der Zwischenträger auch über die Lenkung um seine Hochachse 6 als Lenkachse verschwenkt wird. Ein Teil des diesbezüglichen Lenkgestänges ist in Figur 1 bei 14 symbolisch dargestellt.

Für die Schwenkachse 9 ist bei Erstreckung in Fahrzeuglängsrichtung, wie sie symbolisch dargestellt ist, bevorzugt eine im wesentlichen zur Fahrbahn parallele, also im Regelfall horizontale Lage gegeben. Eine gewisse Anstellung in Höhenrichtung macht es aber möglich, mit in der Einstellung des Sturzes durch Verschwenken des Radträgers 8 um die Achse 9 auch Lenkeffekte zu verbinden, durch die durch Sturzverstellungen und damit verbundene Spurweitenänderungen bedingte Änderungen der Lenkgeometrie je nach Anstellung der Schwenkachse 9 kompensiert oder gegebenenfalls auch verstärkt werden können.

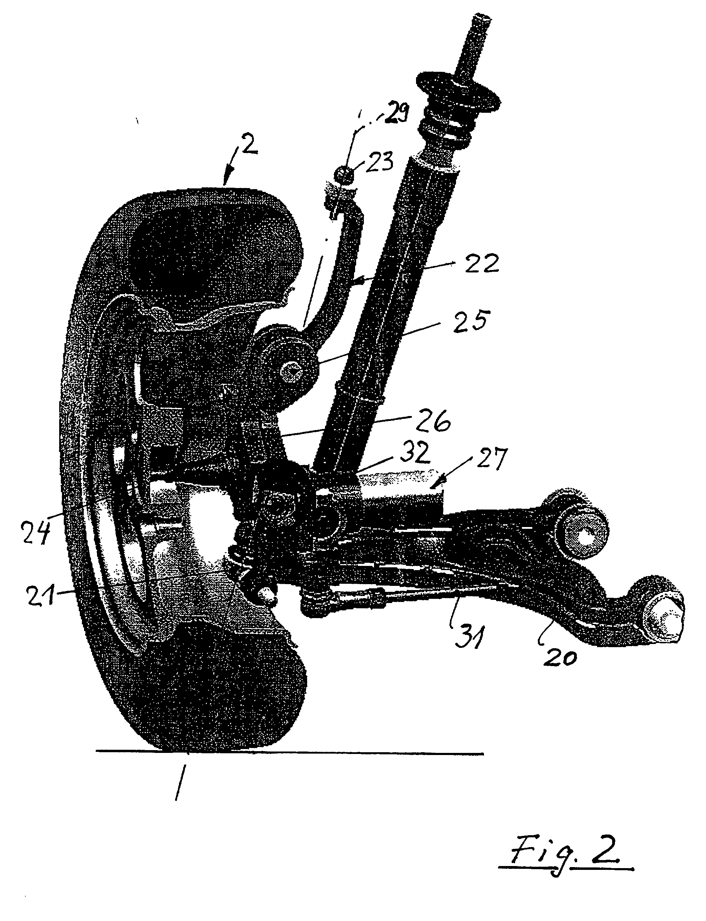

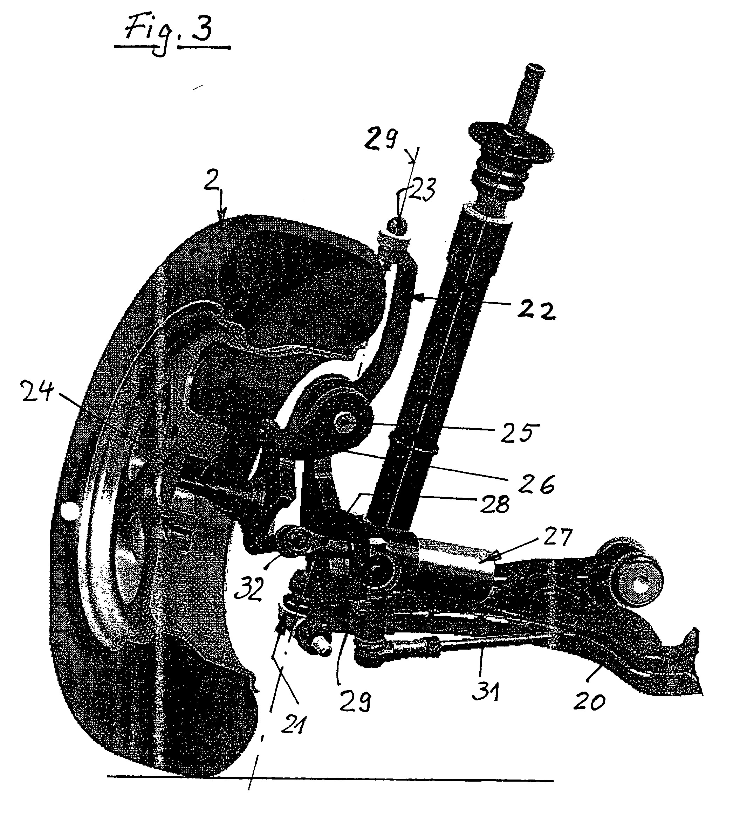

Figuren 2 und 3 zeigen in ebenfalls stark schematisierter Form eine mögliche praktische Ausgestaltung einer unabhängigen Radaufhängung gemäß der Erfindung mit aktiver Sturzsteuerung. In den Figuren 2 und 3 ist dabei der untere Lenker der unabhängigen Radaufhängung mit 20 bezeichnet und durch einen Dreieckslenker gebildet, an dem über das nur teilweise sichtbare Gelenk 21 der Zwischenträger 22 angelenkt ist, der nach oben ragend in einem Gelenk 23 endet, an dem ein nicht weiter dargestellter oberer Lenker angreift.

Der Zwischenträger 22 bildet im Bereich oberhalb der Radachse, die durch den Achszapfen 24 bestimmt ist, die Lagerung für die in Fahrzeuglängsrichtung verlaufende Schwenkachse 25, über die der den Achszapfen 24 tragende Radträger 26 am Zwischenträger 22 angelenkt ist. Am Zwischenträger 22 ist gegenüberliegend zum Radträger 26 auch das Stellglied 27 angeordnet, das als Stellzylinder ausgebildet ist und dessen Kolbenstange 28 mit Abstand zur Schwenkachse 25 am Radträger 26 angelenkt ist. Die Gelenke 21 und 23, über die der Zwischenträger 22 mit teilweise nicht dargestellten Radführungslenkern, so beispielsweise dem unteren Lenker 20 verbunden ist, bestimmen die Lenkachse 29, und im Bezug auf Schwenkbewegungen um die Lenkachse 29 ist der Zwischenträger 22 über den Lenkspurhebel 30 und die Spurstange 31 abgestützt, die ihrerseits bei nicht gelenkten Achsen in nicht weiter dargestellter Weise an dem als Dreieckslenker ausgebildeten unteren Führungslenker 20, oder auch an der Karosserie abgestützt sein kann oder die bei gelenkten Achsen mit einem nicht weiter dargestellten Lenkantrieb verbunden ist, wobei dieser bevorzugt derartig ausgestaltet ist, daß die jeweiligen Lenkwinkel für die Räder unabhängig und in Anpassung an den jeweils eingestellten oder sich einstellenden Sturz korrigiert werden können.

Figuren 2 und 3 veranschaulichen, daß der Radträger 26 im Rahmen der erfindungsgemäßen Lösung auch verhältnismäßig unregelmäßige Formen in der Verbindung zwischen Schwenkachse 25 und dem im Anschluß an die Kolbenstange 28 liegendem Gelenk 32 aufweisen kann, so daß die erfindungsgemäße Sturzverstellung gute Möglichkeiten zur Adaption an vorhandene Grundkonstruktionen bietet und auch in günstiger Weise in Verbindung mit angetriebenen Achsen einsetzbar ist.

Wie der Vergleich der Figuren 2 und 3 zeigt, können im Rahmen der Erfindung Sturzänderungen über verhältnismäßig große Winkelbereiche vorgenommen werden, wobei Figur 2 die herkömmliche Konstruktionslage des Rades 2 für eine unabhängige Radaufhängung zeigt, während in Figur 3, bezogen auf die gleiche Radaufhängung, ein Radsturz in der Größenordnung von etwa 20 bis 30° eingestellt ist.

Sturzverstellungen in der Größenordnung von 20° bieten weitgehende Möglichkeiten, das Fahrverhalten des Fahrzeuges zu beeinflussen, bevorzugt in Verbindung mit speziellen Reifen, die eine unsymmetrische Laufflächenkontur aufweisen und bei denen der Radinnenseite ein Laufflächenbereich des Reifens zugeordnet ist, der bei verhältnismäßig großem Krümmungsradius konvex gewölbt ist, so daß der Reifen bei großen Sturzwinkeln nicht, wie er dies bei herkömmlichen Reifen für mehrspurige Fahrzeuge mit weitgehend ebener Lauffläche tun würde, auf einer Reifenkante läuft, sondern auf einem durch die konvexe Verrundung gebildeten besonderen Laufflächenbereich, der im Hinblick auf die jeweiligen besonderen Bedürfnisse und Wünsche bezüglich Material und Laufflächengestaltung abweichend zum in Richtung auf die Reifenaußenseite anschließenden, ebenen Laufflächenbereich gestaltet sein kann, so beispielsweise eine weichere Gummimischung aufweisen kann. Dadurch ist es in verstärktem Maße möglich, die erfindungsgemäß mit einer aktiven Sturzverstellung ergänzte unabhängige Radaufhängung dahingehend zu nutzen, daß über die Sturzverstellung die fahrdynamischen Eigenschaften bei Kurvenfahrt, bei hoch dynamischen Ausweichmanövern, bei Notbremsung oder auch bei besonderen Straßenverhältnissen, beispielsweise bei glatten Straßen beeinflußt, insbesondere verbessert werden.

Die Sturzverstellung läßt sich damit beispielsweise auch in Verbindung mit Fahrprogrammen nutzen, die fahrerseitig gewählt werden können, um beispielsweise ein besonders sportliches Fahren zu ermöglichen oder um eine Anpassung an winterliche Straßenverhältnisse zu erreichen.

Die Einstellung des jeweiligen Sturzes ist zweckmäßigerweise aber Steuer- oder Regelprogrammen vorbehalten, die teilweise auch ausgehend von anderen Systemen des Fahrzeuges angestoßen sein können, wie etwa dem sogenannten "Bremsassistenten", oder auch von Antiblockiersystemen im Falle der Notbremsung, wenn eine besonders hohe Bremsleistung gefordert wird. In diesem Umfang bietet die Sturzverstellung die Möglichkeit, durch Veränderung des Sturzes auf einen Laufflächenbereich des Reifens umzustellen, der besonders hohe Kraftsschlußbeiwerte gegenüber der Fahrbahn ermöglicht.

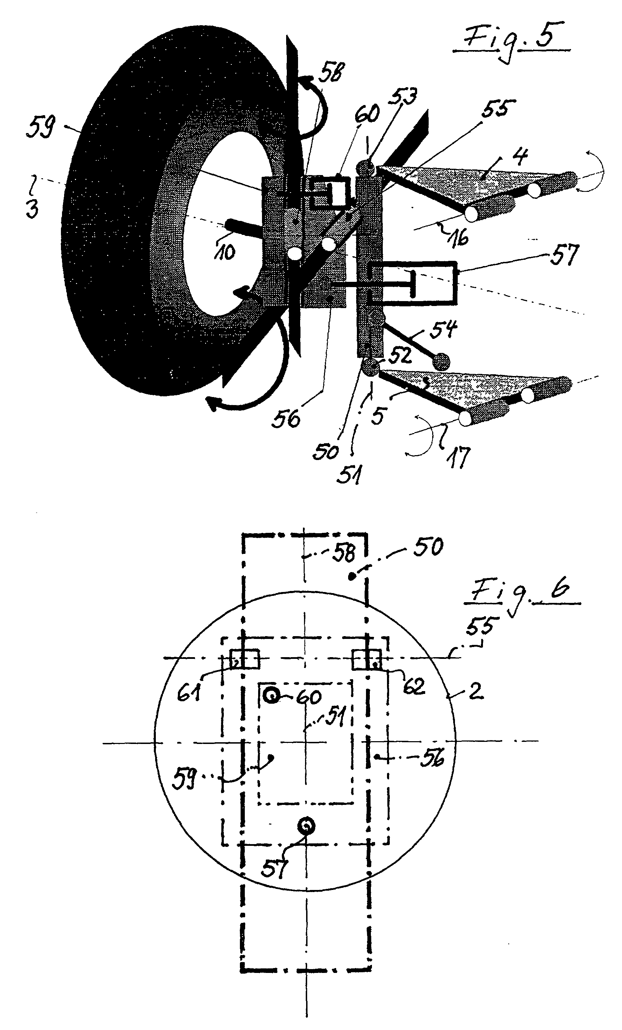

Figur 4 veranschaulicht in schematischer Form, daß der jeweilige Sturz zweckmäßigerweise über einen Sturzrechner vorgegeben wird, der im Hinblick auf wechselseitige Abhängigkeiten zwischen der vorgegebenen Lenkgeometrie und durch Veränderungen des Sturzes bedingten Abweichungen von dieser mit dem Lenkungsrechner zusammenarbeitet.

Die verschiedenen Eingangsgrößen sind hier nur symbolisch dargestellt und es ist zweckmäßig, für den Sturzrechner zumindest den Iststurzwinkel 35, die Querbeschleunigung 36, die Fahrzeuggeschwindigkeit 37, den Lenkwinkel 38, den Straßenzustand 39, die Gierrate 40 und gegebenenfalls auch die Lenkradwinkelgeschwindigkeit zu erfassen.

Als den Lenkungsrechner beeinflussende Größen sind beispielsweise gezeigt die Querbeschleunigung 41, die Geschwindigkeit 42, der Lenkradwinkel 43, die Gierrate 44 und der Iststurzwinkel 45. Soweit gleiche Kenngrößen sowohl für den Sturz wie auch für den Lenkungsrechner benötigt werden, können diese wechselseitig ausgetauscht werden. Über den Sturzrechner wird der Sollsturzwinkel für die vier Räder eines Fahrzeuges, symbolisch angedeutet über die Pfeile 46 und über den Lenkungsrechner der Sollwinkel 47 für die Räder der jeweils gelenkten Achse(n) vorgegeben.

Sind dem Fahrzeug Zusatzsysteme, wie beispielsweise der Bremsassistent, Fahrdynamikprogramme, Antiblockiersysteme oder dergleichen zugeordnet, so können diese Zusatzsysteme, wie sie bei 48 symbolisch angedeutet sind, mit dem Sturzrechner und/oder dem Lenkungsrechner verbunden werden, um die Sturzverstellung in Verbindung mit diesen Systemen und/oder in deren Ergänzung zu nutzen. So kann beispielsweise in dem vorbesprochenen Sinn bei über den Bremsassistenten eingeleiteten Notbremsungen eine Verstellung der Räder auf maximalen Sturz erfolgen. Entsprechendes kann in Verbindung mit Fahrdynamiksystemen geschehen, zumal die erfindungsgemäße Lösung radindividuell die Einstellung des jeweils geforderten Sturzwinkels ermöglicht.

Die erfindungsgemäße aktive Sturzverstellung bietet damit bei verhältnismäßig geringem konstruktivem Aufwand und ohne Eingriff in die eigentliche Radführung vielfältige Möglichkeiten zur Beeinflussung des Fahrverhaltens, und dies bei unterschiedlichen Bauformen von Radaufhängungen, so daß weite Anwendungsbereich gegeben sind, insbesondere keine Beschränkung auf sportliche Fahrzeuge gegeben ist. Gerade für letztgenannte Fahrzeuge ergeben sich aber besonders weitreichende Möglichkeiten und Vorteile, so daß diesbezügliche Ausgestaltungen erfindungsgemäß von besonderer Bedeutung sind.

Figur 5 zeigt eine weitere Prinzipdarstellung einer erfindungsgemäßen Radaufhängung, ähnlich jener in Figur 1.

Die Radaufhängung umfaßt auch in diesem Ausführungsbeispiel einen oberen Führungslenker 4 und einen unteren Führungslenker 5, und es ist die in der karosserieseitigen Anlenkung des jeweiligen Führungslenkers 4, 5 liegende Schwenkachse für den oberen Führungslenker mit 16 und für den unteren Führungslenker mit 17 bezeichnet. Die der Radführung zugeordneten Führungslenker 4 und 5 tragen einen Systemträger 50, wobei dieser Systemträger 50 zu den Führungslenkern 4 und 5 in Bezug auf eine aufrechte, durch seine Anlenkpunkte 52 und 53 gegenüber den Führungslenkern 4 und 5 bestimmte Achse 51 drehfest oder drehbar gegen die Führungslenker 4 und 5 abgestützt sein kann. Symbolisch ist dies durch über einen Spurlenker 54 angedeutet, der einerseits versetzt zur Achse 51 am Systemträger 50 angelenkt ist und der andererseits, bei drehfester Abstützung des Systemträgers 50 gegen einen der Führungslenker, hier dem Führungslenker 5 oder die Karosserie abgestützt sein kann - nicht lenkbarer Systemträger 50 -, oder der beispielsweise unter Vermittlung einer nicht dargestellten Spurstange mit der Lenkung des Fahrzeugs verbunden sein kann, so daß die Achse 51 eine Lenkachse bildet.

Der Systemträger 50 ist schwenkbar über eine Achse 55 mit einem Zwischenträger 56 verbunden, wobei die Schwenkachse 55 in Fahrtrichtung F verläuft und zwar bei paralleler oder geneigter Lage zur Fahrbahnebene. In Bezug auf die Schwenkachse 55 ist der Zwischenträger 56 über ein Stellglied 57 abgestützt, das symbolisch durch einen Stellzylinder veranschaulicht ist und das seinerseits, wie angedeutet, gegenüber dem Systemträger 50 abgestützt ist. Über das Stellglied 57 kann somit der Zwischenträger 56 um die Schwenkachse 55 gegenüber dem Systemträger 50 verschwenkt werden, wobei ein Ausstellen des Zwischenträgers 56 einem Stürzen des Rades 2 ins Negative entspricht.

Der Zwischenträger 56 ist über eine weitere Schwenkachse 58, die aufrecht verläuft und bevorzugt nahezu lotrecht steht, mit dem Radträger 59 verbunden, der den Achszapfen 10 trägt, auf dem das Rad 2 gegenüber dem Radträger 59 drehbar gelagert ist. In Bezug auf die Schwenkbarkeit um die Achse 58 ist der Radträger 59 gegenüber dem Zwischenträger 56 über das Stellglied 60 abgestützt.

Ist der Systemträger 50 in Bezug auf die Achse 51 nicht schwenkbar, so kann die Achse 58 als Lenkachse dienen, wenn eine Lenkbarkeit des Rades 2 gegeben sein soll. In diesem Fall kann die entsprechende Verstellung über das Stellglied 60 erfolgen, das in entsprechender Weise beispielsweise in Abhängigkeit von der Stellung des Lenkrades beaufschlagbar ist.

Besonders zweckmäßig ist im Rahmen der Erfindung eine Lösung, bei der sowohl an Schwenkbarkeit des Systemträgers 50 in Bezug auf die Achse 51 im Sinne einer Lenkachse gegeben ist, und bei der zusätzlich auch eine Verstellbarkeit des Radträgers 59 gegenüber dem Zwischenträger 56 um die Achse 58 realisiert ist. In diesem Fall können Zwischenträger, Radträger und Rad durch Verschwenken um die Achse 51 als Lenkachse in herkömmlicher Weise gelenkt werden, und es kann durch die zusätzliche Lenkbarkeit des Rades 2 mit dem Radträger 59 gegenüber dem Zwischenträger 56 noch eine überlagerte Lenkung realisiert werden, beispielsweise, um in Abhängigkeit von fahrdynamischen Gegebenheiten, oder zur Korrektur unerwünschter Effekte der Radführung, Lenkwinkelkorrekturen vorzunehmen. Besonders zweckmäßig kann dies bei großen Sturzänderungen des Rades sein, wie sie beispielsweise in Verbindung mit der aktiven Sturzstellung des Rades ins Negative eintreten, oder auch um Instabilitäten des Fahrzeuges beim Bremsen oder bei anderweitigen Fahrmanövern entgegenzuwirken.

Figur 6 veranschaulicht im Schema erfindungsgemäß mögliche Lagen der Schwenkachse 55 zwischen Systemträger 50 und Zwischenträger 56, wobei die Lage der Schwenkachse 55 durch zwei scharnierartige Gelenke 61 symbolisiert ist. In Bezug auf die Schwenkachse 55 ist das Stellglied 57 höhenversetzt angeordnet und liegt beispielsweise bei oberhalb der Radachse liegender Schwenkachse 55 im Bereich unterhalb der Radachse, bevorzugt etwa symmetrisch zwischen den Gelenken 61.

Bezogen auf die Schwenkachse 58 liegt, wie Figur 6 zeigt, das Stellglied 60 seitlich versetzt, wobei, wie die Schemadarstellung gemäß Figur 6 veranschaulicht, bezüglich der Anordnung der Stellglieder 57 und 60 im Rahmen der Erfindung ein weiter Gestaltungsraum besteht, so daß jeweils gegebenen konstruktiven Notwendigkeiten in günstiger Weise Rechnung getragen werden kann.

Als Stellglieder sind im Rahmen der Erfindung bislang Stellzylinder, Stellspindeln oder dergleichen Stellantriebe vorgesehen, die - verschleißabhänging - eine beliebige Wiederholung von Stellvorgängen und unterschiedliche Stelllagen ermöglichen. Abweichend hiervon kann erfindungsgemäß auch die Verwendung von Stellgliedern zweckmäßig sein, die lediglich zur Einmalverwendung geeignet sind, wobei diese auch zusätzlich zu vorgeschilderten, mehrfach nutzbaren Stellgliedern eingesetzt werden können. Als Stellglieder zur Einmalverwendung kommen beispielsweise Sprengschrauben, vorgespannte Federabstützungen oder dergleichen zum Tragen. Zweck solcher Einmalverwendungs-Stellglieder ist beispielsweise eine Verstellung auf negativen Sturz in Notfällen, beispielsweise ausgelöst durch Ansprechen des ABS, durch Erreichen kritischer Quermomente oder der gleichen, um eine Stabilisierung des Fahrzeuges zu erreichen. Der Einsatz in solchen "Notfällen" rechtfertigt gegebenenfalls den damit verbundenen Reparatur- bzw. Auswechselaufwand, verhindert aber nicht einen weiteren Fahrbetrieb, wenn auch reduziert, da im negativen Sturz, und ist bei zusätzlicher Verwendung in Verbindung mit Mehrfachstellgliedern geeignet, Notmaßnahmen einzuleiten, die anschließend einen regulären Betrieb unter Rückgriff auf das Mehrfachstellglied ermöglichen.

## Patentansprüche

1. Radaufhängung für Kraftfahrzeuge, insbesondere unabhängige Radaufhängung für Personenkraftwagen, mit einer karosserieseitigen Radführung, einem Radträger (8), der mit dem das Rad tragenden Achszapfen (10) versehen ist und mit einem zwischen Radführung und Radträger liegenden Zwischenträger (7), an dem der Radträger (8) schwenkbar angelenkt ist und gegen den der Radträger zur aktiven Einstellung des Sturzes in Bezug auf eine in Fahrzeuglängsrichtung liegende Schwenkachse (9) über ein in Fahrzeugquerrichtung wirkendes Stellglied (11) abgestützt ist,
**dadurch gekennzeichnet,**
**daß** die in Fahrzeuglängsrichtung verlaufende Schwenkachse (9) des Radträgers (8) höhenversetzt zur Radachse (10) liegt und durch Ausschwenken des Radträgers (8) ein negativer Radsturz in der Größenordnung von etwa 20-30° einstellbar ist, derart, daß die Radaufstandsfläche in einen zur Radinnenseite benachbarten Laufflächenbereich des Reifens verlagert ist (Fig. 3).

2. Radaufhängung nach Anspruch 1,
**dadurch gekennzeichnet,**
**daß** die karosserieseitige Radführung durch eine unabhängige Radaufhängung bildende Radführungslenker (4, 5; 20) gebildet ist.

3. Radaufhängung nach Anspruch 1,
**dadurch gekennzeichnet,**
**daß** die karosserieseitige Radführung durch einen Starrachskörper gebildet ist.

4. Radaufhängung nach Anspruch 1,
**dadurch gekennzeichnet,**
**daß** die karosserieseitige Radführung durch Führungsarme einer Verbundlenkerachse gebildet ist.

5. Radaufhängung nach Anspruch 4,
**dadurch gekennzeichnet,**
**daß** die Schwenkachse (25), über die der Radträger (26) mit dem Zwischenträger (22) verbunden ist, oberhalb der Radachse liegt.

6. Radaufhängung nach einem der Ansprüche 1 bis 4,
**dadurch gekennzeichnet,**
**daß** die Schwenkachse, über die der Radträger mit dem Zwischenträger verbunden ist, unterhalb der Radachse liegt.

7. Radaufhängung nach einem der vorhergehenden Ansprüche,
**dadurch gekennzeichnet,**
**daß** die Schwenkachse (9, 25) parallel zur Radaufstandsfläche, insbesondere horizontal verläuft.

8. Radaufhängung nach einem der Ansprüche 1 bis 6,
**dadurch gekennzeichnet,**
**daß** die Schwenkachse des Radträgers zur Radaufstandsfläche geneigt verläuft.

9. Radaufhängung nach Anspruch 8,
**dadurch gekennzeichnet,**
**daß** die Schwenkachse des Radträgers gegenüber der Radaufstandsfläche schräg nach vorne unten verläuft.

10. Radaufhängung nach Anspruch 8,
**dadurch gekennzeichnet,**
**daß** die Schwenkachse des Radträgers gegenüber der Radaufstandsfläche schräg nach vorne oben verläuft.

11. Radaufhängung nach einem der vorhergehenden Ansprüche,
**dadurch gekennzeichnet,**
**daß** als Stellglied (11, 27) ein hydraulischer Aktuator, insbesondere ein Hydraulikzylinder vorgesehen ist.

12. Radaufhängung nach einem der Ansprüche 1 bis 10,
**dadurch gekennzeichnet,**
**daß** als Stellglied ein elektrisch betriebener Aktuator, insbesondere ein Stellmotor mit Spindeltrieb vorgesehen ist.

13. Radaufhängung nach einem der vorhergehenden Ansprüche,
**dadurch gekennzeichnet,**
**daß** das Stellglied (27) bezogen auf die Radachse gegenüberliegend zur Schwenkachse (25) angeordnet ist.

14. Radaufhängung nach einem der Ansprüche 1 bis 12,
**dadurch gekennzeichnet,**
**daß** das Stellglied bezüglich der Radachse auf der gleichen Seite wie die Schwenkachse angeordnet ist.

15. Radaufhängung nach Anspruch 14,
**dadurch gekennzeichnet,**
**daß** das Stellglied zwischen Schwenkachse und Radachse angeordnet ist.

16. Radaufhängung nach Anspruch 14,
**dadurch gekennzeichnet,**
**daß** die Schwenkachse zwischen Stellglied und Radachse angeordnet ist.

17. Radaufhängung nach einem der vorhergehenden Ansprüche,
**dadurch gekennzeichnet,**
**daß** sowohl die Anlenkung zwischen Radträger (26) und Zwischenträger (22) über die Schwenkachse (25) wie auch die Abstützung über das Stellglied (27) im Bereich, insbesondere zumindest nahezu in der lotrechten Radmittenquerebene liegt.

18. Radaufhängung nach einem der Ansprüche 1 bis 17,
**dadurch gekennzeichnet,**
**daß** die Schwenkachse und/oder die Abstützung über das Stellglied seitlich versetzt zur lotrechten Radmittenquerebene liegen.

19. Radaufhängung nach Anspruch 18,
**dadurch gekennzeichnet,**
**daß** die Schwenkachse und die Abstützung über das Stellglied auf verschiedenen Seiten der lotrechten Radmittenquerebene liegen.

20. Radaufhängung nach Anspruch 18,
**dadurch gekennzeichnet,**
**daß** die Schwenkachse und die Abstützung über das Stellglied auf der gleichen Seite der lotrechten Radmittenquerebene liegen.

21. Radaufhängung nach einem oder mehreren der vorhergehenden Ansprüche,
**dadurch gekennzeichnet,**
**daß** der Radträger (59) gegenüber dem Zwischenträger (56) um eine aufrechte Schwenkachse (58), insbesondere eine Lenkachse schwenkbar ist.

22. Radaufhängung nach einem oder mehreren der vorhergehenden Ansprüche,
**dadurch gekennzeichnet,**
**daß** der Zwischenträger (56) gegenüber der Radführung (Führungslenker 4, 5) um eine aufrechte Schwenkachse (51), insbesondere eine Lenkachse schwenkbar ist.

23. Radaufhängung nach einem oder mehreren der vorhergehenden Ansprüche,
**dadurch gekennzeichnet,**
**daß** die Radführung einen im Übergang der Führungslenker (4, 5) zum Zwischenträger (56) liegenden Systemträger (50) aufweist.

24. Radaufhängung nach einem oder mehreren der vorhergehenden Ansprüche,
**dadurch gekennzeichnet,**
**daß** die in Fahrzeuglängsrichtung liegende Schwenkachse (55) zwischen Zwischenträger (52) und Radführung dem Systemträger (50) zugeordnet ist.

25. Radaufhängung nach einem oder mehreren der vorhergehenden Ansprüche,
**dadurch gekennzeichnet,**
**daß** die zwischen Zwischenträger (56) und Radführung liegende aufrechte Schwenkachse (51) dem Systemträger (50) zugeordnet ist.

## Claims

1. Wheel suspension system for motor vehicles, in particular an independent wheel suspension system for passenger vehicles, with a body-side wheel control system, a wheel support (8) provided with the swivel pin (10) bearing the wheel and with an intermediate support (7) lying between wheel control system and wheel support, on which the wheel support (8) is pivotably mounted and against which the wheel support is supported in order to actively adjust the camber in relation to a pivot axis (9) disposed in the vehicle longitudinal direction by means of an actuator (11) acting in the vehicle transverse direction,
**characterised in that**
the pivot axis (9) of the wheel support (8) extending in the vehicle longitudinal direction is vertically offset from the wheel axis (10) and the wheel support (8) can be pivoted out to adjust to a negative camber in the order of approximately 20-30° so that the wheel contact surface is shifted to a tread area of the tyre adjacent to the wheel inner side (Fig. 3).

2. Wheel suspension system as claimed in claim 1,
**characterised in that**
the body-side wheel control system is provided in the form of wheel control arms (4, 5; 20) constituting an independent wheel suspension system.

3. Wheel suspension system as claimed in claim 1,
**characterised in that**
the body-side wheel control system is provided in the form of a rigid axle member.

4. Wheel suspension system as claimed in claim 1,
**characterised in that**
the body-side wheel control system is provided in the form of control arms of a dead beam axle.

5. Wheel suspension system as claimed in claim 4,
**characterised in that**
the pivot axis (25) about which the wheel support (26) is linked to the intermediate support (22) lies above the wheel axis.

6. Wheel suspension system as claimed in one of claims 1 to 4,
**characterised in that**
the pivot axis about which the wheel support is linked to the intermediate support lies below the wheel axis.

7. Wheel suspension system as claimed in one of the preceding claims,
**characterised in that**
the pivot axis (9, 25) extends parallel with the wheel contact surface and is horizontal in particular.

8. Wheel suspension system as claimed in one of claims 1 to 6,
**characterised in that**
the pivot axis of the wheel support extends at an angle to the wheel contact surface.

9. Wheel suspension system as claimed in claim 8,
**characterised in that**
the pivot axis of the wheel support extends downwardly angled towards the front relative to the wheel contact surface.

10. Wheel suspension system as claimed in claim 8,
**characterised in that**
the pivot axis of the wheel support extends upwardly angled towards the front relative to the wheel contact surface.

11. Wheel suspension system as claimed in one of the preceding claims,
**characterised in that**
the actuator (11, 27) is provided in the form of a hydraulic actuator, in particular a hydraulic cylinder.

12. Wheel Suspension system as claimed in one of claims 1 to 10,
**characterised in that**
the actuator is provided in the form of an electrically operated actuator, in particular an actuator motor with spindle drive.

13. Wheel suspension system as claimed in one of the preceding claims,
**characterised in that**
the actuator (27) is disposed opposite the pivot axis (25) by reference to the wheel axis.

14. Wheel suspension system as claimed in one of claims 1 to 12,
**characterised in that**
the actuator is disposed on the same side as the pivot axis by reference to the wheel axis.

15. Wheel suspension system as claimed in claim 14,
**characterised in that**
the actuator is disposed between the pivot axis and the wheel axis.

16. Wheel suspension system as claimed in claim 14,
**characterised in that**
the pivot axis is disposed between actuator and wheel axis.

17. Wheel suspension system as claimed in one of the preceding claims,
**characterised in that**
both the link between wheel support (26) and intermediate support (22) about the pivot axis (25) and the support afforded via the actuator (27) lie in the region of, in particular at least almost in the vertical median transverse plane of the wheel.

18. Wheel suspension system as claimed in one of claims 1 to 17,
**characterised in that**
the pivot axis and/or the support afforded via the actuator lie offset to the side of the vertical median transverse plane of the wheel.

19. Wheel suspension system as claimed in claim 18,
**characterised in that**
the pivot axis and the support afforded via the actuator lie on different sides of the vertical median transverse plane of the wheel.

20. Wheel suspension system as claimed in claim 18,
**characterised in that**
the pivot axis and the support afforded via the actuator lie on the same side of the vertical median transverse plane of the wheel.

21. Wheel suspension system as claimed in one or more of the preceding claims,
**characterised in that**
the wheel support (59) is pivotable relative to the intermediate support (56) about a vertical pivot axis (58), in particular a steering axis.

22. wheel suspension system as claimed in one or more of the preceding claims,
**characterised in that**
the intermediate support (56) is pivotable relative to the wheel control system (control arms 4, 5) about a vertical pivot axis (51), in particular a steering axis.

23. Wheel suspension system as claimed in one or more of the preceding claims,
**characterised in that**
the wheel control system has a system support (50) disposed in the transition region between the control arms (4, 5) and the intermediate support (56).

24. Wheel suspension system as claimed in one or more of the preceding claims,
**characterised in that**
the pivot axis (55) disposed in the vehicle longitudinal 'direction between intermediate support (52) and wheel control system co-operates with the system support (50).

25. Wheel suspension system as claimed in one or more of the preceding claims,
**characterised in that**
the vertical pivot axis (51) lying between intermediate support (56) and wheel control system co-operates with the system support (50).

## Revendications

1. Suspension de roue pour véhicules, en particulier suspension de roue indépendante pour voiture particulière, comportant un guidage de roue côté carrosserie, un support de roue (8) qui est pourvu du tourillon (10) portant la roue et soutenu par un support intermédiaire (7) situé entre le guidage de roue et le support de roue, support intermédiaire sur lequel le support de roue (8) est articulé à pivotement et contre lequel le support de roue prend appui pour régler de manière active le carrossage par référence à un axe de pivotement (9) situé en direction longitudinale du véhicule via un organe de réglage (11) agissant en direction transversale du véhicule, **caractérisée en ce que** l'axe de pivotement (9) du support de roue (8) s'étendant en direction longitudinale du véhicule est décalé en hauteur par rapport à l'axe de roue (10) et **en ce que** par un pivotement du support de roue (8), un carrossage négatif de l'ordre de grandeur d'approximativement 20 à 30° est réglable de telle sorte que la surface de contact des roues est déportée dans une région de la surface de roulement du pneumatique qui est voisine de la face intérieure de la roue (figure 3).

2. Suspension de roue selon la revendication 1, **caractérisée en ce que** le guidage de roue côté carrosserie est formé par des bielles de poussée de roue (4, 5 ; 20) formant une suspension de roue indépendante.

3. Suspension de roue selon la revendication 1, **caractérisée en ce que** le guidage de roue côté carrosserie est formé par un corps d'essieu rigide.

4. Suspension de roue selon la revendication 1, **caractérisée en ce que** le guidage de roue côté carrosserie est formé par des bras de guidage d'un essieu directeur composite.

5. Suspension de roue selon la revendication 4, **caractérisée en ce que** l'axe de pivotement (25) via lequel le support de roue (6) est relié au support intermédiaire (22), est situé au-dessus de l'axe de roue.

6. Suspension de roue selon l'une des revendications 1 à 4, **caractérisée en ce que** l'axe de pivotement via lequel le support de roue est relié au support intermédiaire, est situé au-dessous de l'axe de roue.

7. Suspension de roue selon l'une des revendications précédentes, **caractérisée en ce que** l'axe de pivotement (9, 25) s'étend parallèlement par rapport à la surface de contact des roues, en particulier à l'horizontale.

8. Suspension de roue selon l'une des revendications 1 à 6, **caractérisée en ce que** l'axe de pivotement du support de roue s'étend de manière inclinée par rapport à la surface de contact des roues.

9. Suspension de roue selon la revendication 8, **caractérisée en ce que** l'axe de pivotement du support de roue s'étend en oblique vers le bas et vers l'avant par rapport à la surface de contact des roues.

10. Suspension de roue selon la revendication 8, **caractérisée en ce que** l'axe de pivotement du support de roue s'étend en oblique vers le haut et vers l'avant par rapport à la surface de contact des roues.

11. Suspension de roue selon l'une des revendications précédentes, **caractérisée en ce qu'**un actionneur hydraulique, en particulier un cylindre hydraulique, est prévu à titre d'organe de réglage (11, 27).

12. Suspension de roue selon l'une des revendications 1 à 10, **caractérisée en ce qu'**un actionneur à fonctionnement électrique, en particulier un servomoteur avec commande à broche, est prévu à titre d'organe de réglage.

13. Suspension de roue selon l'une des revendications précédentes, **caractérisée en ce que** par rapport à l'essieu, l'organe de réglage (27) est agencé à l'opposé de l'axe de pivotement (25).

14. Suspension de roue selon l'une des revendications 1 à 12, **caractérisée en ce que** par rapport à l'axe de roue, l'organe de réglage est agencé sur le même côté que l'axe de pivotement.

15. Suspension de roue selon la revendication 14, **caractérisée en ce que** l'organe de réglage est agencé entre l'axe de pivotement et l'axe de roue.

16. Suspension de roue selon la revendication 14, **caractérisée en ce que** l'axe de pivotement est agencé entre l'organe de réglage et l'axe de roue.

17. Suspension de roue selon l'une des revendications précédentes, **caractérisée en ce que** tant l'articulation entre le support de roue (26) et le support intermédiaire (22) via l'axe de pivotement (25) que le soutien via l'organe de réglage (27) sont situés dans la région du plan transversal médian vertical de la roue, en particulier au moins presque dans ce plan.

18. Suspension de roue selon l'une des revendications 1 à 17, **caractérisée en ce que** l'axe de pivotement et/ou le soutien via l'organe de réglage sont situés en décalage latéral par rapport au plan transversal médian vertical de la roue.

19. Suspension de roue selon la revendication 18, **caractérisée en ce que** l'axe de pivotement et le soutien via l'organe de réglage sont situés sur différents côtés du plan transversal médian vertical de la roue.

20. Suspension de roue selon la revendication 18, **caractérisée en ce que** l'axe de pivotement et le soutien via l'organe de réglage sont situés sur le même côté du plan transversal médian vertical de la roue.

21. Suspension de roue selon l'une ou plusieurs des revendications précédentes, **caractérisée en ce que** le support de roue (5) peut pivoter par rapport au support intermédiaire (56) autour d'un axe de pivotement dressé (58), en particulier d'un axe de direction.

22. Suspension de roue selon l'une ou plusieurs des revendications précédentes, **caractérisée en ce que** le support intermédiaire (56) peut pivoter par rapport au guidage de roue (bielles de poussée 4, 5) autour d'un axe de pivotement dressé (51), en particulier un axe de direction.

23. Suspension de roue selon l'une ou plusieurs des revendications précédentes, **caractérisée en ce que** le guidage de roue présente un support de système (50) situé à la transition entre les bielles de poussée (4, 5) et le support intermédiaire (56).

24. Suspension de roue selon l'une ou plusieurs des revendications précédentes, **caractérisée en ce que** l'axe de pivotement (55) entre le support intermédiaire (52) et le guidage de roue, situé en direction longitudinale du véhicule, est associé au support de système (50).

25. Suspension de roue selon l'une ou plusieurs des revendications précédentes, **caractérisée en ce que** le l'axe de pivotement (51) dressé situé entre le support intermédiaire (56) et le guidage de roue, est associé au support de système (50).
